# FASCICULE DE BREVET EUROPEEN

(11) **EP 1 072 814 B1**
(45) Date de publication et mention de la délivrance du brevet: **12.04.2006**
(21) Numéro de dépôt: 00401986.5
(22) Date de dépôt: 10.07.2000
(51) Int. Cl.: F16D 59/02, F16D 55/40

(54) **Système de freinage d'un rotor par rapport à un stator**
Einrichtung zum Bremsen eines Rotors gegenüber einem Stator
Device for braking a rotor with respect to a stator

(30) Priorité: 27.07.1999 FR 9909718
(43) Date de publication de la demande: 31.01.2001
(73) Titulaire: POCLAIN HYDRAULICS INDUSTRIE, 60411 Verberie (FR)
(72) Inventeur: Case, Jean-Claude, 60123 Bonneuil-en-Valois (FR); Souply, Jean-Pierre, 60300 Senlis (FR); Rouillard, Jean-Marie, 60610 La Croix Saint-Ouen (FR); Vidal, Stéphane, 60126 Longueil Sainte-Marie (FR)
(74) Mandataire: Intes, Didier Gérard André

(56) Documents cités:
- EP-A- 0 913 304
- US-A- 5 911 292

## Description

La présente invention concerne un système de freinage d'un rotor par rapport à un stator, comprenant des disques de frein disposés dans une enceinte de disques, ces disques étant répartis en une première série de disques solidaires du stator et une deuxième série de disques solidaires du rotor vis-à-vis de la rotation de ce dernier par rapport au stator, le système comprenant, en outre, un dispositif de piston de frein susceptible d'être commandé entre une configuration de freinage dans laquelle une partie active de ce dispositif de piston coopère avec les disques de frein pour solliciter ces derniers en contact de freinage et une configuration de défreinage, le système comprenant encore des moyens de commande de ce dispositif de piston qui comportent des moyens de rappel élastique de freinage sollicitant en permanence le dispositif de piston de frein vers sa configuration de freinage, une chambre de défreinage, distincte de l'enceinte de disques et susceptible d'être alimentée en fluide sous pression par un conduit de défreinage pour solliciter le dispositif de piston de frein dans sa configuration de défreinage, et une chambre de freinage susceptible d'être alimentée en fluide sous pression pour solliciter le dispositif de piston de frein vers sa configuration de freinage, le système de freinage comprenant, encore, un dispositif de refroidissement des disques de frein par circulation de fluide.

Ce système de freinage est à effets multiples. Il permet en effet un freinage de stationnement et de secours grâce à la présence des moyens de rappel élastique de freinage qui permettent le freinage lorsque la chambre de défreinage n'est pas suffisamment alimentée en fluide sous pression pour augmenter de volume en surmontant l'effort de rappel élastique de freinage. Il permet également un freinage de service ou dynamique, qui sert à décélérer et à freiner un véhicule entraîné par un moteur comprenant ce système de freinage, sous l'effet de l'alimentation en fluide de la chambre de freinage. Ainsi, les disques de frein sont aptes à absorber l'énergie produite lors de la décélération et de l'arrêt du véhicule.

La nécessité, pour un tel frein à effet multiple, d'irriguer les disques de frein à l'aide d'un fluide de refroidissement est connue, par exemple par les brevets US 3 927 737 et US 3 946 837. Ce refroidissement est réalisé par une circulation de fluide alimentée par une conduite spécifique de refroidissement qui débouche dans l'enceinte de disques. L'évacuation du débit de fluide de refroidissement à l'extérieur du carter du système de freinage se fait par une autre conduite raccordée à un retour de fluide.

Ainsi, le carter du système de freinage doit comporter deux orifices pour cette circulation de fluide de refroidissement, un orifice pour la conduite de défreinage qui alimente la chambre de défreinage, et un orifice pour la conduite de freinage qui alimente la chambre de freinage. Quatre perçages, raccordés chacun à un conduit de fluide spécifique devant être géré spécialement sont donc nécessaires. Ceci augmente les coûts de production et complique la gestion du système de freinage.

Un système de freinage du type précité est également connu par EP-A-0 913 304, dans lequel un conduit de prélèvement raccorde en permanence la chambre de défreinage à l'enceinte de disques. Ce conduit de prélèvement est réalisé dans un dispositif à clapet qui sert à faciliter la vidange de la chambre de défreinage lorsqu'un freinage de service d'urgence est nécessaire. Le fluide prélevé en permanence dans la chambre de défreinage sert à lubrifier et à refroidir l'assemblage de disques de frein.

Ce conduit de prélèvement est disposé à l'intérieur du système de freinage, entre la chambre de défreinage et l'assemblage de disques. On ne peut donc y avoir accès qu'en démontant le frein. Les opérations de maintenance sont par conséquent délicates, longues et coûteuses.

La présente invention a pour but de proposer un système de freinage simplifié par rapport à ceux de l'art antérieur précité et surmontant les inconvénients indiqués ci-dessus.

Ce but est atteint grâce au fait que le dispositif de refroidissement comporte, pour son alimentation en fluide de refroidissement, un conduit de refroidissement, raccordé en dérivation sur le conduit de défreinage et communiquant avec l'enceinte de disques, au fait que le conduit de refroidissement est réalisé dans une partie de carter du système de freinage et au fait qu'il comporte des moyens pour limiter la quantité de fluide de refroidissement prélevée par le conduit de refroidissement sur le conduit de défreinage.

Le conduit de refroidissement est raccordé en dérivation sur le conduit de défreinage, de sorte que le carter du système de freinage ne comporte qu'un seul orifice pour alimenter à la fois le circuit de refroidissement et la chambre de défreinage (un orifice étant en outre prévu pour l'alimentation en fluide de la chambre de freinage). Cependant, le conduit de refroidissement est relié au circuit de défreinage en amont de la chambre de défreinage.

L'alimentation en fluide de défreinage conditionne la circulation du fluide de refroidissement. En d'autres termes, le refroidissement cesse lorsque le défreinage n'est plus effectif, ce qui est fonctionnel puisque la source d'échauffement cesse également quand la rotation du rotor est arrêtée. En revanche, pendant la phase de décélération, la chambre de défreinage continue d'être alimentée, de sorte que les disques de frein continuent d'être irrigués en fluide de refroidissement.

En outre, la circulation continue de fluide dans le circuit de défreinage permet de maintenir la température de ce fluide à une valeur telle que sa viscosité soit suffisamment faible, par exemple inférieure à 40 cSt, pour que l'interruption de défreinage par vidange de la chambre de défreinage se réalise avec un temps de réponse faible, de l'ordre de 0,2 seconde, même si la température ambiante est basse, par exemple inférieure à 0°C.

Par rapport à celui de EP-A-0 913 304, le système de freinage selon l'invention permet une maintenance grandement simplifiée puisque, pour accéder au conduit de refroidissement, il n'est pas nécessaire de démonter le frein, ni même l'ensemble de la conduite de défreinage. Le conduit de refroidissement est réalisé dans une partie de carter et il n'est pas nécessaire de démonter des pièces internes au système de freinage pour y avoir accès.

Avantageusement, le conduit de refroidissement est raccordé au conduit de défreinage par un tronçon de raccordement, qui est pratiqué dans la partie de carter et qui présente une extrémité située sur la périphérie externe de ladite partie de carter et fermée par des moyens d'obturation amovibles.

Dans ce cas, pour accéder au conduit de refroidissement, il suffit de démonter ces moyens d'obturation.

Par ailleurs, la quantité de fluide de refroidissement prélevée sur le conduit de défreinage est limitée par les moyens prévus à cet effet, de sorte que le prélèvement du fluide de refroidissement ne nuit pas au défreinage.

Avantageusement, le conduit de refroidissement est raccordé au conduit de défreinage par l'intermédiaire d'un dispositif de limitation du débit du fluide dans ledit conduit de refroidissement.

Ce dispositif de limitation du débit constitue un moyen simple pour limiter la quantité de fluide de refroidissement prélevée sur le conduit de défreinage.

Ce dispositif de limitation est de préférence situé dans ledit tronçon de raccordement. Ainsi, les opérations de maintenance (nettoyage, échange, réparation) du dispositif de limitation peuvent être réalisées après un simple démontage des moyens d'obturation précités. Le dispositif de limitation peut même être réalisé sous la forme de cartouches interchangeables disposées dans le tronçon de raccordement (qui est de préférence rectiligne). Différentes cartouches peuvent être utilisées, pour satisfaire à différentes conditions d'utilisation du frein.

Avantageusement, le dispositif de limitation est aménagé, au moins en partie, dans les moyens d'obturation qui sont disposés de manière à s'interposer entre le conduit de défreinage et la sortie du conduit de refroidissement dans le système de freinage.

Ainsi, à partir d'une fabrication "standard", il est possible de seulement changer les moyens d'obturation pour adapter le dispositif de limitation aux conditions d'utilisation du frein.

Ce dispositif de limitation est avantageusement réalisé par une restriction par l'intermédiaire de laquelle le conduit de refroidissement est raccordé au conduit de défreinage.

Avantageusement, le conduit de refroidissement est raccordé au conduit de défreinage par l'intermédiaire d'un clapet taré n'autorisant la circulation du fluide du conduit de défreinage vers ledit conduit de refroidissement que lorsque la pression de fluide dans la chambre de défreinage est au moins égale à une pression déterminée.

Ce clapet taré permet d'éviter que le prélèvement du fluide de refroidissement ne fasse chuter la pression dans le circuit d'alimentation en fluide de la chambre de défreinage. En outre, il permet éventuellement d'opérer le défreinage avec une pression inférieure à la valeur de tarage du clapet, sans faire circuler le fluide de refroidissement.

La présence de ce clapet taré ou, plus généralement, d'un dispositif de limitation comprenant des moyens pour automatiquement empêcher l'alimentation en fluide du conduit de refroidissement, permet d'éviter un inconvénient majeur de l'art antérieur décrit dans EP-A-0 913 304. Cet inconvénient réside dans le fait que, du fluide étant prélevé en permanence dans la chambre de défreinage par le conduit de prélèvement, une diminution de la pression dans cette chambre (due par exemple à un dysfonctionnement mineur des moyens d'alimentation en fluide) risque de provoquer un freinage intempestif. En effet, le prélèvement de fluide vidange la chambre de défreinage et amplifie la diminution de pression. Il faut en outre noter que le fait qu'un tel clapet taré ou de tels moyens automatiques puissent être disposés dans le conduit de refroidissement, lui-même situé dans une partie de carter, facilite la maintenance de ce clapet ou de ces moyens.

Ceci est en particulier intéressant lorsqu'il est nécessaire de faire fonctionner un défreinage de secours pour pouvoir remorquer la machine équipée du système de freinage selon l'invention. Dans un tel cas, la pression qui permet le défreinage est en général délivrée par une source de fluide auxiliaire de secours, telle qu'un accumulateur oléopneumatique pré-chargé, un groupe électropompe de secours, une pompe à main ou autre. Le débit de fluide délivré par une telle source est relativement faible et la présence du clapet taré permet d'éviter qu'il ne soit nécessaire de "dépenser" inutilement du fluide pour un refroidissement qui ne présente pas d'intérêt dans le cas du remorquage.

Un moteur hydraulique comprenant un bloc-cylindres tournant à pistons radiaux disposé dans un carter fixe présentant un organe de réaction pour les pistons comporte avantageusement un système de freinage selon l'invention, le rotor et le stator dudit système étant respectivement solidaires en rotation du bloc-cylindres et du carter de ce moteur.

Ce moteur à carter fixe peut par exemple assurer l'entraînement d'un ou plusieurs organes de déplacement (roues) d'un véhicule. Le carter est fixé au bâti du véhicule tandis que le bloc-cylindres, par l'intermédiaire d'un arbre, est attelé à la roue.

Le système de freinage à effet multiple permet, lors du freinage dynamique, d'opérer une décélération progressive de ce véhicule.

Dans un tel moteur, l'enceinte de disques est avantageusement raccordée à l'espace intérieur du moteur ménagé entre le carter et le bloc-cylindres par l'intermédiaire de moyens de clapet anti-retour autorisant seulement la circulation du fluide dans le sens allant de l'enceinte de disques vers ledit espace intérieur.

L'espace intérieur du moteur est normalement empli de fluide à une pression limitée, en particulier sous l'effet des fuites qui se produisent dans le bloc-cylindres. La circulation de fluide de refroidissement est opérée simplement en faisant en sorte que ce fluide se déverse dans l'espace intérieur du moteur après son passage dans l'enceinte de disques. Généralement, l'espace intérieur du moteur est raccordé à un réservoir sans pression par un conduit de retour de fuites. De cette manière, le conduit de retour de fuites du moteur est utilisé pour évacuer le fluide de refroidissement. Cette disposition est avantageuse, puisqu'elle permet de supprimer au niveau du système de freinage le raccordement à un retour de fluide et la conduite correspondante dans le carter du système de freinage qui étaient nécessaires pour évacuer le fluide de refroidissement.

Lorsque le moteur comporte un arbre moteur solidaire en rotation du bloc-cylindres et un conduit de retour de fuites qui relie une enceinte interne du moteur à une enceinte extérieure de décharge, l'enceinte de disques communique avantageusement avec cette enceinte interne par un conduit de raccordement ménagé dans l'arbre moteur. Cette enceinte interne est distincte de l'espace intérieur du moteur qui est ménagé entre le bloc-cylindres et la partie du carter du moteur qui comporte la came de réaction.

Dans ce cas, le conduit de raccordement ménagé dans l'arbre moteur est de conformation extrêmement simple. On réalise ainsi un moteur compact muni d'un frein à effet multiple, pour lequel le circuit de refroidissement met à profit le conduit de retour de fuites existant du moteur et lui est raccordé par une disposition simple et peu coûteuse grâce au conduit de raccordement percé dans l'arbre moteur.

Selon une variante avantageuse, le moteur comporte au moins un groupe de pistons qui sont susceptibles d'être "débrayés" en étant ramenés dans leurs cylindres respectifs vers l'axe de rotation du moteur, lesdits pistons étant susceptibles d'être maintenus dans cette position débrayée par la pression d'un fluide régnant dans l'espace intérieur du moteur ménagé entre l'organe de réaction et le bloc-cylindres, ledit espace intérieur étant relié au conduit de retour de fuites par des moyens de clapet taré. L'enceinte de disques est alors avantageusement raccordée à l'espace intérieur du moteur de sorte que la pression servant à maintenir les pistons en position débrayée est assurée par le fluide provenant de l'enceinte de disques.

Grâce à cette disposition, le fluide de refroidissement est mis à profit pour contribuer à maintenir les pistons en position débrayée, sans nécessiter la présence d'un conduit alimenté spécifiquement à cet effet. Par exemple, les moyens de clapet taré peuvent comporter un clapet taré à environ 2 bar.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- La figure 1 montre, en coupe axiale, un moteur hydraulique à pistons radiaux équipé d'un système de freinage conforme à l'invention ;
- la figure 2 illustre une variante du moteur de la figure 1 ;
- les figures 3 et 4 montrent, selon deux variantes schématiques correspondant respectivement aux figures 1 et 2, le circuit de circulation du fluide de refroidissement, et
- les figures 5A et 5B montrent, selon une variante, une réalisation de la région V du moteur de la figure 1 ou de la région correspondante du moteur de la figure 2.

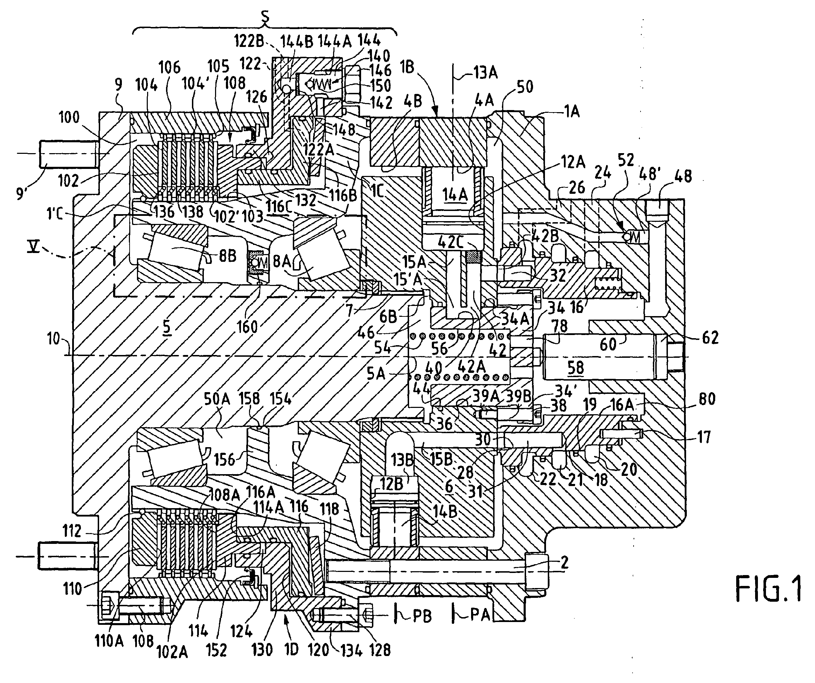

La figure 1 montre un moteur hydraulique à pistons radiaux, à carter fixe qui comporte plusieurs parties, à savoir une première partie 1 A, dénommée couvercle de distribution, une deuxième partie 1B, dont la périphérie interne est ondulée de manière à former une came de réaction, et une troisième partie 1C. Ces différentes parties sont assemblées par des vis 2.

Dans l'exemple représenté, la came ondulée est elle-même réalisée en deux parties, 4A et 4B, juxtaposées axialement. Le moteur comprend un bloc-cylindres 6 qui est monté à rotation relative autour d'un axe de rotation 10 par rapport à la came et qui comporte une pluralité de cylindres radiaux à l'intérieur desquels sont montés coulissants des pistons radiaux.

On distingue deux groupes de cylindres, à savoir un premier groupe de cylindres 12A, et un deuxième groupe de cylindres 12B. Les axes 13A des cylindres 12A (axes disposés radialement par rapport à l'axe de rotation 10) définissent un premier plan radial PA, tandis que les axes 13B des cylindres du deuxième groupe 12B définissent un deuxième plan radial PB distinct du plan PA. Les pistons 14A qui coulissent dans les cylindres 12A du premier groupe coopèrent avec la première partie 4A de la came, tandis que les pistons 14B qui coulissent dans les cylindres 12B du deuxième groupe coopèrent avec la deuxième partie 4B de la came.

Le bloc-cylindres 6 entraîne en rotation un arbre 5 qui coopère avec lui par des cannelures 7. L'extrémité de l'arbre 5 opposée au couvercle de distribution 1A porte un plateau de sortie 9 qui, par des goujons 9', peut être attelé à une roue. L'arbre 5 est supporté par rapport à la partie 1C du carter par des moyens de palier, par exemple des paliers à roulements coniques 8A et 8B.

Le moteur comporte encore un distributeur interne de fluide 16 qui, par un système à pions et encoches 17, est rendu solidaire en rotation du couvercle de distribution 1A.

Le distributeur 16 présente une face axiale externe 18 étagée, coopérant avec une face axiale interne 19 étagée du couvercle de distribution 1A. Entre les faces 18 et 19, sont ménagées trois gorges, respectivement désignées par les références 20, 21 et 22.

Le moteur comporte encore deux conduits principaux, à savoir un conduit principal d'alimentation et un conduit principal d'échappement. Ces conduits principaux ne se trouvent pas dans le plan de coupe de la figure 1 mais, pour faciliter la compréhension, on a indiqué leurs positions par des traits interrompus. Ainsi, le premier conduit principal 24 est relié en permanence à la première gorge 20, tandis que le deuxième conduit principal 26 est relié en permanence à la troisième gorge 22. La deuxième gorge 21 peut, selon la position d'un sélecteur de cylindrée non représenté sur la figure 1, être reliée à l'une ou l'autre des gorges 20 et 22.

On pourrait appliquer l'invention à d'autres types de moteurs, par exemple à un moteur à pistons radiaux non débrayables ou à un moteur ayant, comme seul groupe de cylindres, le groupe 12A, ou encore à un moteur pour lequel seulement deux gorges de distribution, respectivement reliées en permanence à l'un et à l'autre des conduits principaux, sont ménagées entre le distributeur et le couvercle de distribution.

Des conduits de distribution sont pratiqués dans le distributeur et débouchent dans une face de distribution radiale 28 de ce dernier, en appui contre une face radiale de communication 30 du bloc-cylindres. Les conduits de distribution relient sélectivement les gorges 20, 21 et 22 à la face de distribution. Dans l'exemple représenté, on a seulement montré un conduit de distribution 31 qui relie la gorge 21 à la face de distribution 28, et un conduit de distribution 32 qui relie la gorge 22 à la face de distribution. Chaque cylindre est associé à un conduit de cylindre, qui permet de le relier à la face de communication 30 du bloc-cylindres, afin de le mettre en communication alternativement avec chacun des conduits de distribution au cours de la rotation du bloc-cylindres par rapport à la came.

Ainsi, pour chaque cylindre 12B du deuxième groupe de cylindres, un conduit de cylindre 15B met directement ce cylindre en communication avec la face de communication 30. En revanche, pour les cylindres 12A du premier groupe, la communication des conduits de cylindre 15A avec la face de communication 30 s'opère par l'intermédiaire d'un sélecteur de débrayage 34.

Le sélecteur 34 est formé par un tiroir axialement mobile dans un alésage central 36 du bloc-cylindres. Le sélecteur est solidaire du bloc-cylindres vis-à-vis de la rotation autour de l'axe 10. Il présente en effet une partie de bride 34' pourvue de perçages à travers lesquels passent les tiges de vis 38. Ces tiges présentent, chacune, une partie d'extrémité filetée 39A vissée dans un taraudage du bloc-cylindres, et une partie intermédiaire 39B lisse, avec laquelle coopère le perçage de la bride 34' dans lequel est engagée la tige considérée. Ainsi, le sélecteur 34 peut coulisser par rapport aux vis 38.

La face cylindrique externe 34A du sélecteur 34 coopérant avec l'alésage 36 du bloc-cylindres présente autant de conduits de communication en forme de rainures 40 que le premier groupe de cylindres comporte de cylindres, chaque rainure 40 étant associée à un conduit de cylindre 15A.

Chaque conduit de cylindre 15A comprend une extrémité raccordée au cylindre 12A et une autre extrémité formant un orifice 15'A qui est ouvert dans l'alésage 36 du bloc-cylindres. Cet orifice 15'A est en communication permanente avec la rainure de communication 40 associée au conduit de cylindre 15A considéré.

A chaque conduit de cylindre 15A est associé un passage de distribution formé par un conduit 42 qui présente un premier orifice 42A ouvert dans l'alésage 36 du bloc-cylindres et un deuxième orifice 42B ouvert sur la face de communication 30 du bloc-cylindres. Comme on le voit sur la figure 1, ceci permet de raccorder le passage de distribution 42 aux conduits de distribution tels que le conduit 32.

Le conduit de cylindre 15A et le passage de distribution 42 débouchent donc tous deux dans l'alésage 36 et, comme on le voit sur la figure 1, ceci permet de faire communiquer le conduit de cylindre 15A avec les conduits de distribution lorsque le sélecteur 34 occupe sa première position. En section axiale, l'ensemble formé par le conduit 15A, la rainure de communication 40 et le passage de distribution 42 forme dans la première position du sélecteur 34, un conduit sensiblement en U, relié à la face de communication 30 du bloc-cylindres. La rainure de communication 40 s'étend sensiblement axialement et sa longueur est suffisante pour relier les orifices 15'A et 42A dans la première position du sélecteur. L'extrémité du passage de distribution 42 située du côté du cylindre 12A est fermée par un bouchon 42C.

Une gorge annulaire d'intercommunication 44 est pratiquée dans l'alésage 36 du bloc-cylindres 6. En fonction du déplacement du sélecteur, cette gorge 44 peut être mise en communication avec les rainures de communication 40. En effet, considérés dans le sens du déplacement du sélecteur de sa première position à sa deuxième position, l'orifice 42A, l'orifice 15'A et la gorge 44 sont disposés l'un après l'autre.

Dans la deuxième position du sélecteur, celui-ci est déplacé sur la gauche de la figure 1 de sorte que les orifices 15'A des conduits de cylindres des cylindres du premier groupe continuent de communiquer avec les rainures de communication 40, qui communiquent elles-mêmes avec la gorge 44 et qui, surtout dépassent au-delà de la face 6B du bloc-cylindres de manière à communiquer avec une chambre de décompression 46 qui est elle-même reliée à un conduit de retour de fuites 48. Ce conduit 48 est ménagé dans la partie 1A du carter et, de manière connue en soi, il est raccordé à un réservoir sans pression. Dans cette deuxième position du sélecteur, les conduits 15A sont isolés des conduits de communication 42. Il en résulte que les pistons 14A des cylindres du premier groupe peuvent être débrayés.

La gorge 44 permet, pour une position transitoire intermédiaire des sélecteurs entre sa première et sa deuxième position, de faire communiquer entre eux les conduits de cylindre 15A dans une enceinte isolée qu'elle délimite.

Le sélecteur 34 est rappelé en permanence vers sa première position par un ressort 54 disposé dans un évidement 56 de ce sélecteur et prenant appui sur l'arbre 5. Il est commandé vers sa deuxième position par un piston de commande 58 coopérant avec un cylindre de commande 60 qui est ménagé dans le couvercle de distribution 1A. Ce piston est déplacé par l'alimentation en fluide d'une chambre de commande 62.

La chambre de décompression 46 est raccordé à l'enceinte interne 80 du moteur ménagée entre le piston 58 et un alésage interne 16A du distributeur par des perçages 78 pratiqués dans la bride 34' du sélecteur 34. Le conduit de retour de fuites 48 est raccordé à cette enceinte 80. Il est également raccordé, par un tronçon 48', à l'espace intérieur du moteur 50 qui est ménagé entre le bloc-cylindres et la came. Ce tronçon 48' est équipé d'un clapet taré anti-retour 52 qui permet seulement la circulation de fluide dans le sens allant de l'espace 50 vers le conduit 48, et seulement lorsque la pression de fluide dans l'espace 50 est au moins égale à une pression prédéterminée.

Le stator du moteur comprend le carter 1A, 1 B, 1C, tandis que le rotor comprend l'arbre 5 et le bloc-cylindres 6.

On décrit maintenant le système de freinage S du rotor par rapport au stator. Il comprend des disques annulaires de freinage disposés dans une enceinte de disques 100. Les disques sont répartis en une première série de disques 102 qui sont solidaires du stator et en une deuxième série de disques 104 qui sont solidaires du rotor vis-à-vis de la rotation de ce dernier par rapport au stator. En effet, les disques 104 présentent, à leurs périphéries externes, des dentures 104' qui coopèrent avec des cannelures 105 réalisées à la périphérie interne d'une partie du rotor constitué dans l'exemple avantageux représenté par un élément de paroi axiale 106 qui est fixé au plateau 9 par des vis 108 et qui, à partir de ce plateau, s'étend vers le couvercle de distribution 1A de manière à s'étendre autour d'une portion de la partie 1C du carter du moteur et autour d'une portion de l'arbre 5. La partie 1C présente en effet une portion axiale sensiblement en forme de manchon 1'C qui est disposé sur un rayon intermédiaire entre celui de l'arbre 5 et celui de l'élément de paroi axiale 106.

Les disques annulaires 102 de la première série sont solidaires de cette partie 1C du carter et, à cet effet, ils présentent à leurs périphéries internes des dentures 102' qui coopèrent avec des cannelures 103 réalisées à la périphérie externe du manchon 1'C.

Le freinage est commandé à l'aide d'un dispositif de piston de frein 108. En effet, les disques 102 et 104 sont disposés entre un organe axialement fixe 110 et la face active 108A du dispositif de piston de frein. Dans l'exemple représenté, l'organe 110 est constitué par une bride annulaire qui est montée sur le manchon 1'C et est maintenue par rapport à ce dernier à l'aide d'un jonc de blocage 112. Lorsque le dispositif de piston 108 est déplacé vers l'élément fixe 110, les disques des deux séries, qui sont intercalés les uns entre les autres, sont sollicités en contact de frottement les uns contre les autres. En l'espèce, les disques tournants sont les disques extérieurs, solidaires de l'élément de paroi axiale 106, tandis que les disques fixes sont les disques intérieurs solidaires du manchon 1'C. Les disques extérieurs présentent un diamètre extérieur supérieur à celui des disques intérieurs.

Le frein est à effets multiples et, pour ce faire, le dispositif de piston 108 se compose en fait de deux pistons élémentaires coulissant l'un par rapport à l'autre. Le premier piston élémentaire 114 est celui qui présente la face active 108A et il coopère avec le premier disque de frein (en l'espèce, un disque 102A de la première série), qui est le plus proche de cette face active.

Le deuxième piston élémentaire 116 coopère avec les moyens de rappel élastique de freinage qui, dans l'exemple représenté, sont constitués par une rondelle ressort Belleville 118. Ce ressort 118 tend à rapprocher élastiquement le piston élémentaire 116 des disques de frein. Ce piston élémentaire comporte une face de butée 116A qui vient alors en appui sur une face de butée complémentaire 114A du premier piston élémentaire, la face 114A étant opposée à la face 108A. Ainsi, sous l'effet du ressort 118, le piston élémentaire 116 tend à repousser le piston élémentaire 114 vers les disques de frein, de sorte que l'ensemble du dispositif de piston 108 occupe sa configuration de freinage.

Ce système de freinage comporte également une chambre hydraulique de défreinage 120 qui peut être alimentée en fluide sous pression par un conduit de défreinage 122 pour, avec un effort antagoniste à celui du ressort 118, éloigner le piston élémentaire 116 des disques de frein. Le système de freinage comporte encore une chambre hydraulique de freinage 124 qui est susceptible d'être alimentée en fluide sous pression par un conduit de freinage 126 pour solliciter le premier piston élémentaire 114 dans sa position de freinage. Le piston élémentaire 116 a une portion en forme de disque annulaire 116B et une partie de manchon 116C qui, à partir de la portion en forme de disque annulaire, s'étend vers les disques de frein. C'est ce manchon 116C qui porte la face de butée 116A.

Les chambres 120 et 124 sont séparées par une pièce 1D qui, grâce à des vis 128 est solidaire de la partie 1C du carter. Cette pièce 1D est dénommée support de frein. La séparation entre les chambres 120 et 124 est réalisée par une partie 130 de la pièce 1D en forme de bride radiale. La pièce 1D comporte également une première extension axiale en forme de manchon 132 qui, à partir de la partie 130, s'étend vers l'enceinte de disques 100. Elle présente une deuxième extension axiale 134 située du côté opposé à l'extension 132 et coopérant avec les vis 128.

On comprend que l'alimentation en fluide de la chambre de défreinage 120 permet, si la chambre 124 n'est pas alimentée en fluide, d'assurer le défreinage. Des moyens de rappel élastique de défreinage tendant à repousser en permanence le piston élémentaire 114 dans le sens allant en éloignant sa face active 108A de l'élément fixe 110 peuvent également être prévus. En particulier, les disques intérieurs 102 peuvent, au voisinage de leurs périphéries internes, présenter des ajours ou des encoches 136 dans lesquels sont disposés des ressorts hélicoïdaux de compression 138 prenant appui sur la face 108A du piston élémentaire 114 et sur la face 110A de la pièce 110 qui est tournée vers cette face 108A.

Les ajours 136 favorisent également la circulation du fluide de refroidissement comme on le verra dans la suite.

Le conduit de freinage 126 ne se trouve pas entièrement dans le plan de coupe et l'on a seulement représenté l'amorce de ce conduit qui est voisine de la chambre de freinage 124.

De même, le conduit de défreinage 122 ne se trouve pas dans le plan de coupe et il est représenté essentiellement en traits interrompus. Il s'étend entre une première extrémité 122A qui s'ouvre dans la chambre de défreinage 120 et une deuxième extrémité 122B qui est ouverte à l'extérieur du carter pour être raccordée à une source de fluide sous pression. Ce conduit de défreinage, de même que le conduit de freinage 126, est réalisé dans la pièce 1D.

Le rotor du système de freinage proprement dit comprend une partie de l'arbre 5, le plateau 9 et l'élément de paroi axiale 106, tandis que le stator comprend la partie 1C du carter à laquelle est fixé le support de frein 1D.

Le système de freinage conforme à l'invention comporte un dispositif de refroidissement des disques de freins 102 et 104 par circulation de fluide. En effet, un conduit de refroidissement 140 est raccordé en permanence à l'enceinte de disques 100. Ce conduit 140 est disposé dans la pièce 1D et il s'ouvre dans l'espace intérieur du système de freinage dans la région où se trouve le ressort 118, l'extrémité du conduit de refroidissement étant située entre la pièce 1C et le deuxième piston élémentaire 116. Ce conduit de refroidissement 140 est raccordé en dérivation au conduit de défreinage 122. En effet, le conduit 140 présente un tronçon radial 142 qui est relié à un tronçon axial 144 formé par un perçage pratiqué dans une région de la partie 134 de la pièce 1D qui se trouve en saillie radiale, ce perçage étant fermé sur l'extérieur de la pièce 1D à l'aide d'un bouchon 146. Ce tronçon 144 permet de raccorder le conduit de refroidissement 140 au conduit de défreinage 122.

Le perçage 144 comporte une première partie taraudée 144A avec laquelle coopère le bouchon 146 et une deuxième partie 144B de diamètre inférieur à celui de la première partie 144A, cette partie 144B ayant une intersection avec le conduit de défreinage 122. Ainsi, un épaulement est formé entre les parties 144A et 144B. Cet épaulement est mis à profit pour disposer une restriction 148 constituée, par exemple, par une pièce en forme de rondelle ayant un orifice calibré et calée contre l'épaulement précité. De ce fait, la quantité de fluide de refroidissement qui est prélevée sur la conduite de défreinage 122 lorsque celle-ci est alimentée en fluide sous pression se trouve limitée.

Un clapet taré 150 est disposé dans le conduit de refroidissement 140. Ainsi, ce conduit est raccordé à la conduite 122 par l'intermédiaire de ce clapet taré, qui n'autorise la circulation du fluide entre les conduits de défreinage et de refroidissement que dans le sens allant du conduit de défreinage 122 vers le conduit de refroidissement 140 et que lorsque la pression du fluide dans le conduit de défreinage 122, et donc dans la chambre de défreinage 120, est au moins égale à une pression déterminée conditionnée par le tarage du clapet.

Par exemple, lorsque le moteur est alimenté par une pompe principale d'un circuit fermé hydrostatique, le circuit comporte également une pompe de gavage. Dans ce cas, la chambre de défreinage est alimentée par l'intermédiaire de cette pompe de gavage, la pression de gavage étant par exemple de l'ordre de 20 bar, tandis que la pression délivrée par la pompe principale peut atteindre 300 à 400 bar. Le défreinage est obtenu dès que la pression du fluide dans la chambre de défreinage atteint une pression de défreinage, par exemple de 10bar. Le clapet 150 peut être taré à une pression intermédiaire entre la pression de défreinage et la pression de gavage, par exemple de l'ordre de 12 à 14 bar. Ainsi, le défreinage étant opéré par la pression de gavage, le refroidissement s'effectue pendant le défreinage en fonctionnement normal. Si, par exemple, à la suite d'une déficience du circuit hydraulique, il est nécessaire de remorquer le véhicule et donc d'accomplir le défreinage, la conduite de défreinage 122 peut être alimentée par un système de secours, tel qu'une pompe à main. La pression délivrée par cette pompe est inférieure à la pression de tarage du clapet 150, de sorte que le fluide de défreinage n'est pas consommé inutilement pour le refroidissement.

On remarque que le clapet taré 150 est disposé après la restriction 148 dans le sens allant du conduit de défreinage 122 vers le conduit de refroidissement. De ce fait, le débit de fluide traversant le clapet est limité et celui-ci peut être dimensionné en conséquence.

Sur la figure 1, l'enceinte de disques 100 est fermée vis-à-vis de l'extérieur du système de freinage par un joint 152 qui réalise une jonction étanche entre l'élément de paroi axiale 106 et la pièce 1D. L'enceinte de disques est en communication permanente avec la partie de l'espace intérieur du moteur dans laquelle se trouve le roulement 8B du palier de support de la rotation de l'arbre par rapport au carter. Ce roulement 8B est disposé entre la périphérie interne de la partie de manchon 1'C de la pièce 1C et l'arbre 5.

Cette partie de l'espace intérieur du moteur dans laquelle se trouve le roulement 8B est dénommée enceinte de roulement et est désignée par la référence 50A. Elle est séparée de la partie 50 de l'espace intérieur du moteur qui se trouve entre le bloc-cylindres et la came par une coopération entre la partie 1C du carter et l'arbre 5. A cet effet, dans l'exemple représenté, la partie 1C du carter comporte une face axiale 154 qui, dans l'espèce, est formée à l'extrémité intérieure d'un élément de paroi annulaire 156 de la partie 1C du carter qui s'étend vers l'arbre 5. Un joint d'étanchéité 158 assure une liaison étanche entre la face 154 et la face axiale de l'arbre.

L'enceinte de roulement 50A communique avec l'espace 50 par un clapet anti-retour 160 permettant seulement la circulation de fluide dans le sens allant de l'enceinte de disques 100 et de l'enceinte 50A vers l'espace 50. Dans l'exemple représenté, ce clapet 160 est disposé dans l'élément de paroi annulaire 156. Cet espace étant raccordé au conduit de retour de fuites 48 par le tronçon de conduite 48' équipé du clapet 52évoqué précédemment, le fluide de refroidissement peut revenir à un réservoir sans pression. Dans le cas de l'exemple précité, la pression de tarage de ce clapet est de l'ordre de 2 bar.

Dans l'exemple représenté, l'élément de paroi annulaire 156 qui permet la séparation de l'enceinte 50A et de l'espace 50 est disposé entre les roulements 8A et 8B du palier de support de la rotation de l'arbre 5 par rapport au carter.

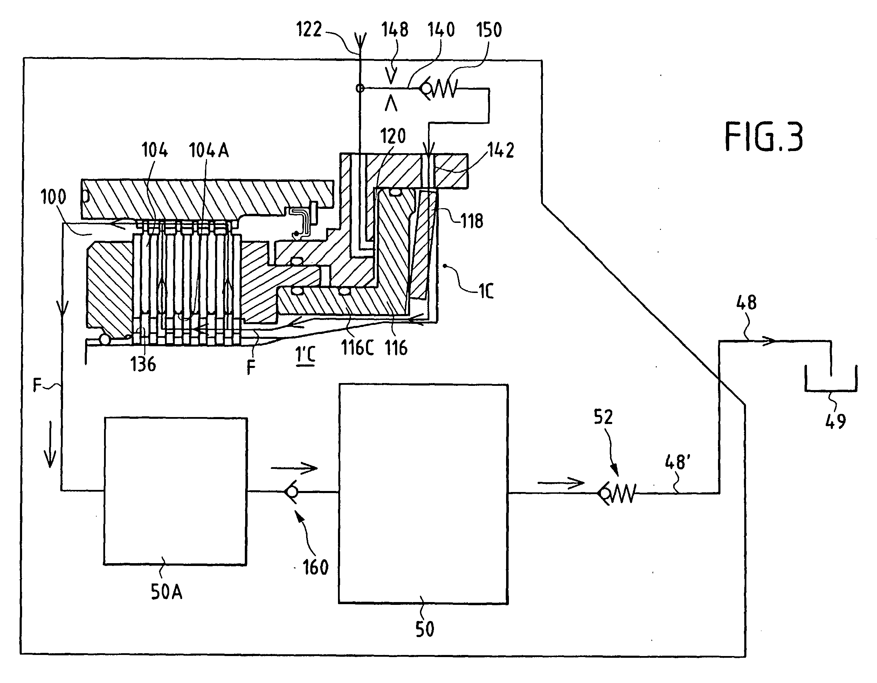

La circulation de fluide de refroidissement est illustrée schématiquement sur la figure 3 qui montre seulement une partie de l'enceinte de disques 100. On distingue la conduite de défreinage 122 qui est reliée à la chambre de défreinage 120. En dérivation sur cette conduite, se trouve la conduite 140 de refroidissement. On a représenté la restriction 148 et le clapet taré 150 disposés sur cette conduite. Ainsi, le fluide de refroidissement s'écoule dans le tronçon de conduite de refroidissement 142 pour parvenir dans l'espace ménagé entre le deuxième piston élémentaire 116 et la partie 1C du carter, dans la région dans laquelle se trouve le ressort 118. Le fluide s'écoule ensuite entre les faces axiales en regard de la partie de manchon 116C du piston élémentaire 116 et de la partie de manchon 1'C de la partie 1C du carter, jusqu'à parvenir dans la région dans laquelle se trouvent les disques de freins.

Le conduit de refroidissement 142 communique avec l'enceinte de disques 100 dans une région de cette enceinte qui est voisine de l'axe de rotation 10 du rotor par rapport au stator. En effet, l'arrivée de fluide de refroidissement dans l'enceinte 100 se fait, comme indiqué précédemment, dans la région des périphéries intérieures des disques de frein. Sur le diamètre d'arrivé du fluide de refroidissement dans l'enceinte de disques 100, se trouvent seulement les disques intérieurs 102 solidaires du stator. En effet, les extrémités libres intérieures 104A des disques 104 parviennent sur un diamètre supérieur au diamètre maximal des ajours 136 qui sont seulement pratiqués dans les disques intérieurs. Bien que les ressorts 138 de défreinage soient avantageusement présents dans les ajours 136, ceci n'est pas obligatoirement le cas. Que ces ressorts soient présents ou non, les ajours constituent des voies de circulation du fluide de refroidissement. Comme indiqué par les flèches F, ce fluide passe dans les ajours et peut se diffuser entre les disques pour baigner complètement ces derniers.

Lorsque les ressorts de défreinage ne sont pas présents, les ajours 136 sont avantageusement décalés angulairement les uns par rapport aux autres (d'un disque à l'autre) lors du montage des disques. Ceci facilite encore la diffusion du fluide de refroidissement à travers l'ensemble des disques puisque les ajours décalés constituent des chicanes axiales.

On voit sur la figure 3 que le fluide de refroidissement qui parvient à l'enceinte de disques 100 dans une région de cette enceinte qui est voisine de l'axe de rotation du rotor par rapport au stator, a tendance à s'écouler radialement vers l'extérieur. Les calories sont ainsi transportées vers l'élément de paroi axiale 106 qui délimite l'enceinte de disques 100 du côté de sa périphérie externe. Cet élément de paroi axiale est en contact avec l'air ambiant extérieur, de sorte que la circulation précitée permet de réaliser un refroidissement effectif. Ce refroidissement est encore augmenté par le fait que l'élément de paroi axiale 106 est un élément tournant.

Dans la variante avantageuse représentée, les disques intérieurs 102 (ceux dont les périphéries internes sont les plus proches de l'axe) sont fixes en rotation puisqu'ils sont solidaires du stator. Le fluide de refroidissement entre donc dans l'enceinte de disque 100 dans une région "calme" de cette dernière et parvient ensuite au contact des disques tournants pour être diffusé vers l'extérieur de l'enceinte de disques 100.

Sur la figure 3, on a indiqué par la flèche F la circulation du fluide de refroidissement qui, de l'enceinte de disques 100, pénètre dans l'enceinte de roulement 50A qui est en communication permanente avec l'enceinte 100. Cette enceinte 50A ne communique avec l'espace intérieur 50 du moteur qui est ménagé entre le bloc-cylindres et la came que par l'intermédiaire du clapet anti-retour 160 qui autorise seulement la circulation du fluide dans le sens allant de l'enceinte de roulement 50A vers l'espace intérieur 50. Ainsi, l'enceinte de disque 100 communique avec l'espace 50 par l'intermédiaire du clapet anti-retour 160 qui est disposé dans un "conduit de raccordement" entre l'enceinte 100 et l'espace 50. Ensuite, par l'intermédiaire du clapet taré anti-retour 52 dont la pression de tarage est par exemple de l'ordre de 2 bar, le fluide de refroidissement peut s'écouler dans le tronçon 48' de conduite de retour de fuites, puis dans la conduite de retour de fuites 48 pour être déversé dans une enceinte extérieure de décharge 49, par exemple un réservoir sans pression.

On a indiqué précédemment que les pistons 14A du premier groupe de pistons du moteur de la figure 1 sont susceptibles d'être débrayés en étant ramenés dans leurs cylindres respectifs vers l'axe de rotation 10 du moteur. La présence des clapets 160 et 52 précédemment évoqués permet de faire régner dans l'espace intérieur 50 une pression égale à la pression de tarage du clapet 52, par exemple de l'ordre de 2 bar. Ainsi, cette pression, qui sert à maintenir les pistons 14A dans leur position débrayée, est assurée par le fluide de refroidissement provenant de l'enceinte de disque 100.

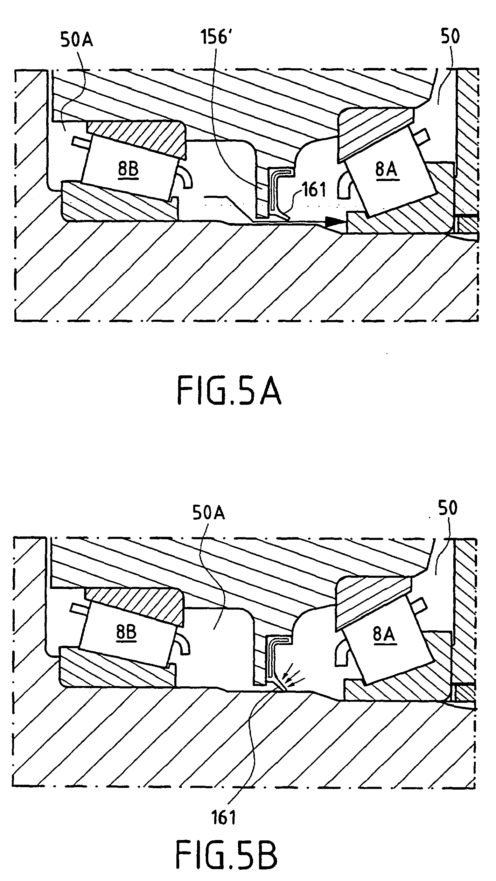

On a indiqué précédemment que le clapet anti-retour 160 autorise seulement la circulation de fluide dans le sens allant de l'enceinte 100 vers l'espace intérieur 50. Comme on le voit sur les figures 5A et 5B, ces "moyens de clapet anti-retour" peuvent également être réalisés par un joint dynamique. Ainsi, dans l'exemple représenté sur les figures 5A et 5B, un joint à lèvre 161 peut être interposé entre l'enceinte de roulement 50A et l'espace intérieur 50 du moteur. Le joint à lèvre est par exemple disposé dans une partie de bride annulaire 156' de la partie 1C du carter, bride annulaire conformée en conséquence. Ce joint à lèvre est disposé de manière à permettre la circulation du fluide dans le sens allant de l'enceinte 50A vers l'espace intérieur 50, lorsque la pression de fluide dans l'enceinte 50A est supérieure à celle qui règne dans l'espace 50 (figure 5A). Dans le cas contraire, comme le montre la figure 5B, le joint à lèvre 161 empêche la circulation du fluide dans le sens allant de l'espace 50 vers l'enceinte 50A.

De manière générale, un joint dynamique peut être interposé entre l'enceinte de disque 100 et l'espace 50 pour permettre seulement la circulation du fluide dans le sens allant de l'enceinte 100 vers l'espace 50.

Lorsque les pistons 14A préalablement débrayés sont "ré-embrayés" sous l'effet d'un déplacement du sélecteur 34, ceci peut occasionner une surpression momentanée dans l'espace intérieur 50. Le fait d'empêcher la circulation du fluide dans le sens allant de cet espace 50 vers l'enceinte 100 permet d'éviter l'apparition de pointes de pression dans la chambre de disques 100.

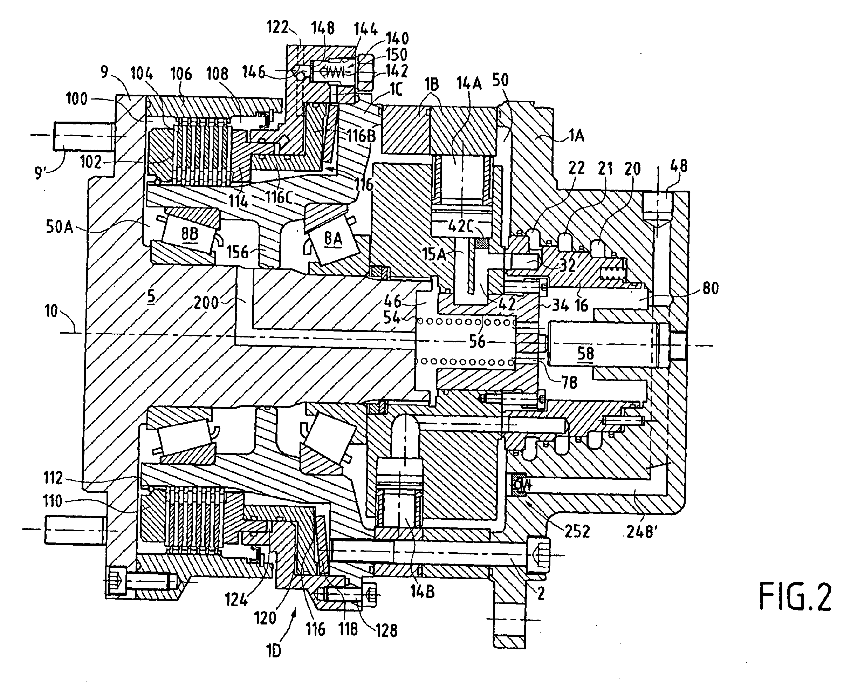

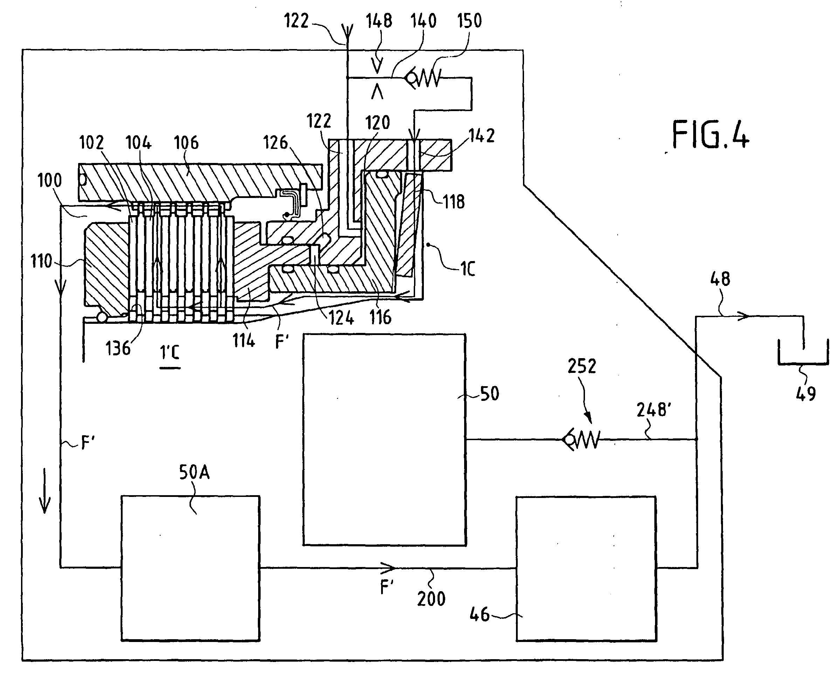

Les figures 2 et 4 montrent une variante affectant la circulation du fluide de refroidissement. En effet, sur la figure 2, l'enceinte de disques 100 communique avec la chambre de décompression 46 par un conduit de raccordement 200 qui est ménagé dans l'arbre 5 du moteur. Comme on l'a indiqué précédemment, cette chambre de décompression est reliée, par les perçages 78 du sélecteur 34, à l'enceinte interne 80 du moteur avec laquelle, en position débrayée des pistons du premier groupe, les conduits de cylindre 15A correspondant à ces pistons communiquent.

Cette enceinte interne 80 est elle-même reliée au conduit de retour de fuites 48. Ainsi, dans le cas d'un moteur à pistons débrayables, on met à profit la communication déjà existante entre la chambre de décompression 46 et le conduit de retour de fuites pour également faire communiquer l'enceinte de disques 100 avec ce conduit de retour de fuites.

Ceci s'appliquerait également à un moteur non débrayable et, de manière générale, cette variante concerne le cas où l'enceinte de disques 100 communique, par un conduit de raccordement 200 ménagé dans l'arbre moteur, avec une enceinte interne du moteur elle-même raccordée à une enceinte extérieure de décharge.

Comme dans l'exemple de la figure 1, celui de la figure 2 montre par ailleurs que l'enceinte de disques 100 communique en permanence avec l'enceinte de roulement 50A comprenant les roulements 8B.

Les perçages 78 qui font communiquer la chambre de compensation 46 avec le conduit de retour de fuites 48 (par l'intermédiaire de l'enceinte 80) peuvent être équipés de moyens formant restriction. En particulier, la présence des spires du ressort 54 en travers de ces perçages peut faire office de telles restrictions. De cette sorte, une perte de charge est obtenue de part et d'autre des perçages 78.

Comme celui de la figure 1, le moteur de la figure 2 présente des pistons 14A du premier groupe qui sont débrayables. Cette fois encore, pour les maintenir en position débrayée, on utilise une pression de fluide régnant dans l'espace intérieur du moteur 50 délimité entre le bloc-cylindres 6 et le carter 1 A, 1 B, 1C. Sur la figure 2, contrairement à la figure 1, l'enceinte de disques 100 ne communique pas avec l'espace 50 mais, par l'intermédiaire de la chambre 46, avec le conduit de retour de fuites. L'espace 50 communique par l'intermédiaire d'un clapet anti-retour taré 252 avec une conduite 248' qui est raccordée en dérivation au conduit de retour de fuites 48. La pression tarage du clapet 252 est par exemple de l'ordre de 2 bar. Ce clapet n'autorise la circulation de fluide entre l'espace 50 et la conduite 248' que dans le sens allant de l'espace 50 vers cette conduite. Sous l'effet des fuites entre le bloc-cylindres et les pistons, du fluide se déverse dans l'espace intérieur 50. Grâce à la présence du clapet anti-retour taré 252, on s'assure que cette pression de fluide soit au moins égale à la pression de tarage du clapet, pour contribuer au maintien des pistons 14A en position débrayée lorsque le sélecteur 34 est mis en position de débrayage.

Le schéma de circulation de fluide de refroidissement du moteur de la figure 2 est représenté sur la figure 4. On reconnaît la conduite de défreinage 122 raccordée à la chambre de défreinage 120, ainsi que la conduite de freinage 126 raccordée à la chambre de freinage 124. La conduite de refroidissement 140 est raccordée en dérivation sur la conduite de défreinage 122. Comme sur les figures 1 et 3, le fluide de refroidissement parvient dans l'enceinte de disques 100 et est diffusé vers l'extérieur de cette enceinte. La circulation du fluide de refroidissement est indiquée par les flèches F'. A sa sortie de l'enceinte de disques 100, le fluide de refroidissement pénètre dans la chambre de décompression 46 par le conduit de raccordement 200 (par exemple en ayant préalablement traversé l'enceinte de roulement 50A). Cette circulation entre l'enceinte de disques 100 et la chambre 46 s'effectue sans restriction particulière. Au sortir de la chambre 46, le fluide de refroidissement est raccordé à une enceinte extérieure de décharge 49, par l'intermédiaire du conduit de retour de fuites 48. De son côté, l'espace intérieur du moteur 50 est raccordé à la conduite de retour de fuites 48 par une conduite intermédiaire 248' sur laquelle est disposé le clapet taré anti-retour 252.

Le joint dynamique ou joint à lèvre 161 des figures 5A et 5B peut également être prévu dans la variante de la figure 2.

## Revendications

1. Système de freinage (S) d'un rotor (5, 9, 106) par rapport à un stator (1C, 1'C) comprenant des disques de frein disposés dans une enceinte de disques (100), ces disques étant répartis en une première série de disques (102) solidaires du stator (1'C) et une deuxième série de disques (104) solidaires du rotor (106) vis-à-vis de la rotation de ce dernier par rapport au stator, le système comprenant, en outre, un dispositif de piston de frein (108, 114, 116) susceptible d'être commandé entre une configuration de freinage dans laquelle une partie active (108A) de ce dispositif de piston coopère avec les disques de frein (102, 104) pour solliciter ces derniers en contact de freinage et une configuration de défreinage, le système comprenant encore des moyens de commande de ce dispositif de piston qui comportent des moyens de rappel élastique de freinage (118) sollicitant en permanence le dispositif de piston de frein vers sa configuration de freinage, une chambre de défreinage (120), distincte de l'enceinte de disques (100) et susceptible d'être alimentée en fluide sous pression par un conduit de défreinage (122) pour solliciter le dispositif de piston de frein (108, 114, 116) dans sa configuration de défreinage, et une chambre de freinage (124) susceptible d'être alimentée en fluide sous pression (126) pour solliciter le dispositif de piston de frein (108, 114, 116) vers sa configuration de freinage, le système de freinage comprenant, encore, un dispositif (140, 148) de refroidissement des disques de frein par circulation de fluide,
**caractérisé en ce que** le dispositif de refroidissement comporte, pour son alimentation en fluide de refroidissement, un conduit de refroidissement (140, 142), raccordé en dérivation sur le conduit de défreinage (122) et communiquant avec l'enceinte de disques (100), **en ce que** le conduit de refroidissement est réalisé dans une partie de carter (1D) du système de freinage et **en ce qu'**il comporte des moyens (148) pour limiter la quantité de fluide de refroidissement prélevée par le conduit de refroidissement (140) sur le conduit de défreinage (122).

2. Système selon la revendication 1, **caractérisé en ce que** le conduit de refroidissement (140, 142) est raccordé au conduit de défreinage (122) par un tronçon de raccordement (144), qui est pratiqué dans la partie de carter (1D) et qui présente une extrémité située sur la périphérie externe de ladite partie de carter et fermée par des moyens d'obturation amovibles.

3. Système selon la revendication 1 ou 2, **caractérisé en ce que** le conduit de refroidissement (140) est raccordé au conduit de défreinage (122) par l'intermédiaire d'un dispositif (148) de limitation du débit du fluide dans ledit conduit de refroidissement (140).

4. Système selon la revendication 3, **caractérisé en ce que** le conduit de refroidissement (140) est raccordé au conduit de défreinage (122) par l'intermédiaire d'une restriction (148).

5. Système selon l'une quelconque des revendications 1 à 4, **caractérisé en ce que** le conduit de refroidissement (140) est raccordé au conduit de défreinage (122) par l'intermédiaire d'un clapet taré (150) n'autorisant la circulation du fluide du conduit de défreinage (122) vers ledit conduit de refroidissement (140) que lorsque la pression de fluide dans la chambre de défreinage (120) est au moins égale à une pression déterminée.

6. Système selon les revendications 4 et 5, **caractérisé en ce que** le clapet taré (150) est disposé après la restriction (148) dans le sens allant du conduit de défreinage (122) vers le conduit de refroidissement (140).

7. Système selon l'une quelconque des revendications 1 à 6, **caractérisé en ce que** le conduit de refroidissement (140) communique avec l'enceinte de disques (100) dans une région de ladite enceinte qui est voisine de l'axe de rotation (10) du rotor par rapport au stator.

8. Système de frein selon l'une quelconque des revendications 1 à 7 **caractérisé en ce que** les disques (104) de la deuxième série, qui sont solidaires du rotor (5, 9, 106), présentent un diamètre extérieur supérieur au diamètre extérieur des disques (102) de la première série qui sont solidaires du stator (1C, 1'C), le rotor s'étendant au moins en partie (106) autour du stator (1'C) et chaque disque (104) de la deuxième série coopérant avec le rotor par sa périphérie externe (104', 105), tandis que chaque disque (102) de la première série coopère avec le stator par sa périphérie interne (102', 103).

9. Système selon l'une quelconque des revendications 7 et 8, **caractérisé en ce que** des ajours (136) sont pratiqués dans des parties de disques de frein (102, 104) qui se trouvent dans la région de l'enceinte de disques (100) qui est voisine de l'axe (10) de rotation du rotor (5, 9, 106) par rapport au stator (1C, 1'C) et **en ce que** les ajours (136) des disques successivement disposés dans la direction axiale sont décalés angulairement les uns par rapport aux autres.

10. Système selon l'une quelconque des revendications 1 à 9, **caractérisé en ce que** le rotor (5, 9, 106) est supporté à rotation par rapport au stator (1C, 1'C) par un palier comprenant au moins un roulement (8B) disposé dans une enceinte de roulement (50A) en communication permanente avec l'enceinte de disques (100).

11. Moteur hydraulique comprenant un bloc-cylindres (6) tournant à pistons radiaux (14A, 14B), disposé dans un carter fixe (1A, 1B, 1C) présentant un organe de réaction (4A, 4B) pour les pistons, **caractérisé en ce qu'**il comporte un système de freinage (S) selon l'une quelconque des revendications 1 à 9, le rotor (5, 9, 106) et le stator (1C, 1'C) dudit système étant respectivement solidaires en rotation du bloc-cylindres (6) et du carter (1A, 1 B, 1C) de ce moteur.

12. Moteur selon la revendication 11, **caractérisé en ce que** l'enceinte de disques (100) est raccordée à l'espace intérieur (50) du moteur ménagé entre le carter (1A, 1 B, 1C) et le bloc-cylindres (6) par l'intermédiaire de moyens de clapet anti-retour (160) autorisant seulement la circulation du fluide dans le sens allant de l'enceinte de disques (100) vers ledit espace intérieur (50).

13. Moteur selon la revendication 11 ou 12, **caractérisé en ce qu'**il comporte au moins un groupe de pistons (14A) qui sont susceptibles d'être "débrayés" en étant ramenés dans leurs cylindres respectifs (12A) vers l'axe de rotation (10) du moteur, lesdits pistons étant susceptibles d'être maintenus dans cette position débrayée par la pression d'un fluide régnant dans l'espace intérieur (50) du moteur ménagé entre le carter (1A, 1B, 1C) et le bloc-cylindres (6), ledit espace intérieur étant relié au conduit de retour de fuites (48) par des moyens de clapet taré (52), et **en ce que** l'enceinte de disques (100) est raccordée à l'espace intérieur (50) du moteur de sorte que la pression servant à maintenir les pistons en position débrayée est assurée par le fluide provenant de l'enceinte de disques.

14. Moteur selon la revendication 13, **caractérisé en ce qu'**il comporte des moyens (160) pour autoriser la circulation de fluide entre l'enceinte de disques (100) et l'espace intérieur (50) du moteur seulement dans le sens allant de ladite enceinte vers ledit espace.

15. Moteur selon les revendications 13 et 14, **caractérisé en ce qu'**il comporte un clapet anti-retour (160) disposé dans le conduit de raccordement entre l'enceinte de disques (100) et l'espace intérieur du moteur (50).

16. Moteur selon la revendication 11 ou 12, comportant un arbre moteur (5) solidaire en rotation du bloc-cylindres (6) et un conduit de retour de fuites (48, 248') qui relie une enceinte interne (46) du moteur à une enceinte extérieure de décharge (49), **caractérisé en ce que** l'enceinte de disques (100) communique avec ladite enceinte interne (46) par un conduit de raccordement (200) ménagé dans l'arbre moteur (5).

17. Moteur selon la revendication 15, **caractérisé en ce que** l'enceinte de disques (100) est séparée de l'espace intérieur (50) du moteur ménagé entre le carter (1A, 1B, 1C) et le bloc-cylindres (6) par un joint dynamique (161) tel qu'un joint à lèvre disposé de façon à n'autoriser la circulation du fluide entre cette enceinte (100) et cet espace intérieur (50) que dans le sens allant de ladite enceinte vers ledit espace intérieur.

## Patentansprüche

1. System der Bremsung (S) eines Rotors (5, 9, 106) in Bezug auf einen Stator (1C, 1'C), das Bremsscheiben aufweist, die in einer Bremsscheibenkammer (100) angeordnet sind, wobei diese Scheiben in eine erste Serie von Scheiben (102), die fest mit dem Stator (1'C) verbunden sind, und in eine zweite Serie von Scheiben (104), die fest mit dem Rotor (106) verbunden sind, in Bezug auf die Drehung dieses letzteren gegenüber dem Stator, unterteilt sind, wobei das System ferner eine Bremskolbenvorrichtung (108, 114, 116) aufweist, die zwischen einer Bremsbetriebsstellung, in der ein aktiver Teil (108A) dieser Kolbenvorrichtung mit den Bremsscheiben (102, 104) zusammenarbeitet, um diese letzteren in Bremsberührung zu beanspruchen, und einer Bremslösebetriebsstellung gesteuert werden kann, wobei das System weiter Steuermittel für diese Kolbenvorrichtung aufweist, die elastische Bremsrückholmittel (118) aufweisen, die die Bremskolbenvorrichtung ständig in Richtung ihrer Bremsbetriebsstellung beanspruchen, eine Bremslösekammer (120), die von der Bremsscheibenkammer (100) getrennt ist und von einer Bremslöseleitung (122) mit Fluid unter Druck versorgt werden kann, um die Bremskolbenvorrichtung (108, 114, 116) in Richtung ihrer Bremslösebetriebsstellung zu beanspruchen, und eine Bremskammer (124), die mit Fluid unter Druck (126) versorgt werden kann, um die Bremskolbenvorrichtung (108, 114, 116) in Richtung ihrer Bremsbetriebsstellung zu beanspruchen, wobei das Bremssystem weiter eine Vorrichtung (140, 148) zum Kühlen der Bremsscheiben durch Fluidzirkulation aufweist,
**dadurch gekennzeichnet, daß** die Kühlvorrichtung für ihre Kühlmittelversorgung eine Kühlleitung (140, 142) aufweist, die in Abzweigung an die Bremslöseleitung (122) angeschlossen ist und mit der Bremsscheibenkammer (100) kommuniziert, daß die Kühlleitung in einem Teil des Gehäuses (1D) des Bremssystems ausgebildet ist, und daß sie Mittel (148) aufweist, um die Kühlmittelmenge einzuschränken, die von der Kühlleitung (140) aus der Bremslöseleitung (122) entnommen wird.

2. System nach Anspruch 1, **dadurch gekennzeichnet, daß** die Kühlleitung (140, 142) an die Bremslöseleitung (122) durch einen Anschlußabschnitt (144) angeschlossen ist, der in dem Gehäuseteil (1D) ausgebildet ist und ein Ende aufweist, das sich auf der äußeren Peripherie des Gehäuseteils befindet und durch abnehmbare Verschlußmittel verschlossen ist.

3. System nach Anspruch 1 oder 2, **dadurch gekennzeichnet, daß** die Kühlleitung (140) an die Bremslöseleitung (122) über eine Vorrichtung (148) zum Einschränken des Fluiddurchsatzes in der Kühlleitung (140) angeschlossen ist.

4. System nach Anspruch 3, **dadurch gekennzeichnet, daß** die Kühlleitung (140) mit der Bremslöseleitung (122) über eine Drosselstelle (148) verbunden ist.

5. System nach einem der Ansprüche 1 bis 4, **dadurch gekennzeichnet, daß** die Kühlleitung (140) mit der Bremslöseleitung (122) über ein Rückschlagventil (150) verbunden ist, das die Zirkulation des Fluids der Bremslöseleitung (122) zu der Kühlleitung (140) nur gestattet, wenn der Fluiddruck in der Bremslöseleitung (120) mindestens gleich einem bestimmten Druck ist.

6. System nach den Ansprüchen 4 und 5, **dadurch gekennzeichnet, daß** das Rückschlagventil (150) hinter der Drosselstelle (148) in Richtung von der Bremslöseleitung (122) zur Kühlleitung (140) angeordnet ist.

7. System nach einem der Ansprüche 1 bis 6, **dadurch gekennzeichnet, daß** die Kühlleitung (140) mit der Bremsscheibenkammer (100) in einem Bereich der Kammer kommuniziert, die zu der Rotationsachse (10) des Rotors in Bezug auf den Stator benachbart ist.

8. Bremssystem nach einem der Ansprüche 1 bis 7, **dadurch gekennzeichnet, daß** die Scheiben (104) der zweiten Serie, die fest mit dem Rotor (5, 9, 106) verbunden sind, einen Außendurchmesser aufweisen, der größer ist als der Außendurchmesser der Scheiben (102) der ersten Serie, die fest mit dem Stator (1C, 1'C) verbunden sind, wobei der Rotor zumindest zum Teil (106) den Stator (1'C) umschließt und jede Scheibe (104) der zweiten Serie mit dem Rotor über ihre äußere Peripherie (104', 105) zusammenarbeitet, während jede Scheibe (102) der ersten Serie mit dem Stator über ihre interne Peripherie (102', 103) zusammenarbeitet.

9. System nach einem der Ansprüche 7 und 8, **dadurch gekennzeichnet, daß** Durchbrüche (136) in Teilen von Bremsscheiben (102, 104) eingerichtet sind, die sich in dem Bereich der Bremsscheibenkammer (104) befinden, die zur Rotationsachse (10) des Rotors (5, 9, 106) in Bezug auf den Stator (1C, 1'C) benachbart ist, und daß die Durchbrüche (136) der nacheinander in axiale Richtung angeordneten Scheiben winkelig zueinander versetzt sind.

10. System nach einem der Ansprüche 1 bis 9, **dadurch gekennzeichnet, daß** der Rotor (5, 9, 106) drehend in Bezug auf den Stator (1C, 1'C) von einem Lager getragen wird, dies mindestens ein Kugellager (8B) aufweist, das in einer Kugellagerkammer (50A) in ständiger Kommunikation mit der Bremsscheibenkammer (100) angeordnet ist.

11. Hydraulikmotor, der einen drehenden Zylinderblock (6) mit radialen Kolben (14A, 14B) aufweist, der in einem stationären Gehäuse (1A, 1B, 1C) angeordnet ist, der ein Reaktionsorgan (4A, 4B) für die Kolben aufweist, **dadurch gekennzeichnet, daß** er ein Bremssystem (S) nach einem der Ansprüche 1 bis 9 umfaßt, wobei der Rotor (5, 9, 106) und der Stator (1C, 1'C) des Systems drehfest mit dem Zylinderblock (6) beziehungsweise dem Gehäuse (1A, 1B, 1C) dieses Motors verbunden sind.

12. Motor nach Anspruch 11, **dadurch gekennzeichnet, daß** die Bremsscheibenkammer (100) an den Innenraum (50) des Motors, der zwischen dem Gehäuse (1A, 1B, 1C) und dem Zylinderblock (6) eingerichtet ist, über Rückschlagventilmittel (160) angeschlossen ist, die die Fluidzirkulation nur in Richtung von der Bremsscheibenkammer (100) zum Innenraum (50) erlauben.

13. Motor nach Anspruch 11 oder 12, **dadurch gekennzeichnet, daß** er mindestens eine Gruppe von Kolben (14A) aufweist, die "ausgekuppelt" werden können, indem sie in ihren jeweiligen Zylindern (12A) in Richtung zur Rotationsachse (10) des Motors zurückgeführt werden, wobei die Kolben in dieser ausgekuppelten Stellung von dem Druck eines Fluids gehalten werden können, der in dem Innenraum (50) des Motors, welcher Innenraum zwischen dem Gehäuse (1A, 1B, 1C) und dem Zylinderblock (6) eingerichtet ist, herrscht, wobei der Innenraum mit einer Leckrücklaufleitung (48) über Rückschlagventilmittel (52) verbunden ist, und daß die Bremsscheibenkammer (100) an den Innenraum (50) des Motors angeschlossen ist, so daß der Druck, der zum Halten der Kolben in ausgekuppelter Stellung dient, von dem Fluid sichergestellt wird, das von der Bremsscheibenkammer kommt .

14. Motor nach Anspruch 13, **dadurch gekennzeichnet, daß** er Mittel (160) aufweist, um die Fluidzirkulation zwischen der Bremsscheibenkammer (100) und dem Innenraum (50) des Motors nur in Richtung von der Kammer zu dem Raum zu gestatten.

15. Motor nach Anspruch 13 und 14, **dadurch gekennzeichnet, daß** er ein Rückschlagventil (160) aufweist, das in der Anschlussleitung zwischen der Bremsscheibenkammer (100) und dem Innenraum (50) des Motors angeordnet ist.

16. Motor nach Anspruch 11 oder 12, der eine Motorwelle (5) aufweist, die drehfest mit dem Zylinderblock (6) verbunden ist, und eine Leckrücklaufleitung (48, 248'), die eine innere Kammer (46) des Motors mit einer äußeren Kammer zum Entlasten (49) verbindet, **dadurch gekennzeichnet, daß** die Bremsscheibenkammer (100) mit der Innenkammer (46) über eine Anschlussleitung (200) kommuniziert, die in der Motorwelle (5) ausgebildet ist.

17. Motor nach Anspruch 15, **dadurch gekennzeichnet, daß** die Bremsscheibenkammer (100) von dem Innenraum (50) des Motors, der zwischen dem Gehäuse (1A, 1B, 1C) und dem Zylinderblock (6) eingerichtet ist, durch eine dynamische Dichtung (161), wie zum Beispiel durch eine Lippendichtung getrennt ist, die so angeordnet ist, daß sie die Fluidzirkulation zwischen dieser Kammer (100) und diesem Innenraum (50) nur in Richtung von der Kammer zum Innenraum gestattet.

## Claims

1. A braking system (S) for braking a rotor (5, 9, 106) relative to a stator (1C, 1'C), said system comprising brake disks disposed in a disk enclosure (100), which disks are distributed in a first series of disks (102) secured to the stator (1'C) and in a second series of disks (104) constrained to rotate with the rotor (106) relative to the stator, the system further comprising a brake piston device (108, 114, 116) that can be caused to go between a braking configuration in which an active portion (108A) of said piston device co-operates with the brake disks (102, 104) so as to urge said disks into braking contact, and a brake release configuration, the system further comprising control means for controlling the piston device, which control means comprise braking resilient return means (118) continuously urging the brake piston device towards its braking configuration, a brake release chamber (120) distinct from the disk enclosure (100) and suitable for being fed with pressurized fluid via a brake release duct (122) so as to urge the brake piston device (108, 114, 116) into its brake release configuration, and a braking chamber (124) suitable for being fed with pressurized fluid (126) so as to urge the brake piston device (108, 113, 116) towards its braking configuration, the braking system further comprising a cooling device (140, 148) for cooling the brake disks by means of fluid flow;
said braking system being **characterised in that**, for the purpose of being fed with cooling fluid, the cooling device is provided with a cooling duct (140, 142) branching from the brake release duct (122) and communicating with the disk enclosure (100), **in that** the cooling duct is formed in a casing portion (1D) of the braking system, and **in that** it is provided with means (148) for limiting the quantity of cooling fluid tapped by the cooling duct (140) from the brake release duct (122).

2. A system according to claim 1, **characterised in that** the cooling duct (140, 142) is connected to the brake release duct (122) via a connection segment (144) which is formed in a casing portion (1D) and which has an end that is situated at the outer periphery of said casing portion and that is closed by removable closure means.

3. A system according to claim 1 or 2, **characterised in that** the cooling duct (140) is connected to the brake release duct (122) via a device (148) for limiting the flow rate of the fluid through said cooling duct (140).

4. A system according to claim 3, **characterised in that** the cooling duct (140) is connected to the brake release duct (122) via a restriction (148).

5. A system according to any one of claims 1 to 4, **characterised in that** the cooling duct (140) is connected to the brake release duct (122) via a calibrated valve (150) that allows the fluid to flow from the brake release duct (122) to said cooling duct (140) only when the fluid pressure in the brake release chamber (120) is at least equal to a determined pressure.

6. A system according to claims 4 and 5, **characterised in that** the calibrated valve (150) is disposed after the restriction (148) in the direction going from the brake release duct (122) to the cooling duct (140).

7. A system according to any one of claims 1 to 6, **characterised in that** the cooling duct (140) communicates with the disk enclosure (100) in a region of said enclosure that is adjacent to the axis of rotation (10) about which the rotor rotates relative to the stator.

8. A braking system according to any one of claims 1 to 7, **characterised in that** the disks (104) of the second series, which disks are secured to the rotor (5, 9, 106), are of outside diameter greater than the outside diameter of the disks (102) of the first series, which disks are secured to the stator (1C, 1'C), the rotor extending at least in part (106) about the stator (1'C), and each disk (104) of the second series cooperating with the rotor via its outer periphery (104', 105), while each disk (102) of the first series co-operates with the stator via its inner periphery (102', 103).

9. A system according to claim 7 or 8, **characterised in that** perforations (136) are provided in brake disk portions (102, 104) that lie **in that** region of the disk enclosure (100) which is adjacent to the axis of rotation (10) about which the rotor (5, 9, 106) rotates relative to the stator (1C, 1'C), and **in that** the perforations (136) of the disks successively disposed in the axial direction are angularly offset relative to one another.

10. A system according to any one of claims 1 to 9, **characterised in that** the rotor (5, 9, 106) is supported as it rotates relative to the stator (1C, 1'C) by a bearing comprising at least one roller bearing (8B) disposed in a roller bearing enclosure (50A) in continuous communication with the disk enclosure (100).

11. A hydraulic motor comprising a rotary cylinder block (6) having radial pistons (14A, 14B) and disposed in a stationary casing (1A, 1B, 1C) having a reaction member (4A, 4B) for the pistons, said hydraulic motor being **characterised in that** it comprises a braking system (S) according to any one of claims 1 to 9, the rotor (5, 9, 106) and the stator (1C, 1'C) of said system being constrained to rotate respectively with the cylinder block (6) and with the casing (1A, 1B, 1C) of said motor.

12. A motor according to claim 11, **characterised in that** the disk enclosure (100) is connected to the space (50) inside the motor that is provided between the casing (1A, 1B, 1C) and the cylinder block (6) via non-return valve means (160) allowing the fluid to flow only in the direction going from the disk enclosure (100) towards said inside space (50).

13. A motor according to claim 11 or 12, **characterised in that** it includes at least one group of pistons (14A) that are suitable for being "declutched" by being retracted into their respective cylinders (12A) towards the axis of rotation (10) of the motor, said pistons being suitable for being maintained in this declutched position by the fluid pressure prevailing in the inside space (50) of the motor that is provided between the casing (1A, 1B, 1C) and the cylinder block (6), said inside space being connected to the leakage return duct (48) via calibrated valve means (52), and **in that** the disk enclosure (100) is connected to the inside space (50) of the motor so that the pressure serving to maintain the pistons in the declutched position is provided by the fluid coming from the disk enclosure.

14. A motor according to claim 13, **characterised in that** it includes means (160) for allowing the fluid to flow between the disk enclosure (100) and the inside space (50) of the motor only in the direction going from said enclosure towards said space.

15. A motor according to claims 13 and 14, **characterised in that** it includes a non-return valve (160) disposed in the connection duct between the disk enclosure (100) and the space (50) inside the motor.

16. A motor according to claim 11 or 12, including a drive shaft (5) constrained to rotate with the cylinder block (6), and a leakage return duct (48, 248') which connects an internal enclosure (46) of the motor to an external discharge enclosure (49), said motor being **characterised in that** the disk enclosure (100) communicates with said internal enclosure (46) via a connection duct (200) provided in the drive shaft (5).

17. A motor according to claim 15, **characterised in that** the disk enclosure (100) is separated from the inside space (50) of the motor that is provided between the casing (1A, 1B, 1C) and the cylinder block (6) by a dynamic seal (161) such as a lip seal disposed so as to allow the fluid to flow between said enclosure (100) and said inside space (50) only in the direction going from said enclosure towards said inside space.
